# EUROPÄISCHE PATENTSCHRIFT

(11) **EP 2 431 913 B1**
(45) Veröffentlichungstag und Bekanntmachung des Hinweises auf die Patenterteilung: **26.07.2017**
(21) Anmeldenummer: 11007007.5
(22) Anmeldetag: 27.08.2011
(51) Int. Cl.: G06K 9/00, G01N 15/14, G06T 7/00

(54) **Verfahren und Vorrichtung zur Bestimmung von aktuellen Zuständen von Zellen in Zellbereichen**
Method and device for determining the current statuses of cells in cell areas
Procédé et dispositif de détermination d'états actuels de cellules dans des zones de cellules

(30) Priorität: 21.09.2010 DE 102010046784
(43) Veröffentlichungstag der Anmeldung: 21.03.2012
(73) Patentinhaber: Technische Universität Dresden, 01069 Dresden (DE)
(72) Erfinder: Funk, Richard H. W., 01326 Dresden (DE); Koch, Edmund, 01309 Dresden (DE); Steiner, Gerald, 08340 Schwarzenberg (DE)
(74) Vertreter: Rauschenbach, Marion

(56) Entgegenhaltungen:
- US-A1- 2005 273 011
- US-A1- 2008 240 539
- US-B1- 6 276 798

## Beschreibung

Die Erfindung betrifft ein Verfahren und eine Vorrichtung zur Bestimmung von aktuellen Zuständen von Zellen in Zellbereichen, wobei der aktuelle Zustand einer Zelle durch eine Kombination aus Einzelzuständen morphologischer Struktur und aus biochemischem Zustand der Zelle zum gleichen Zeitpunkt definiert ist und den Zustand der Zelle mit einer Zustandsposition in einer Existenzzustandsskala, die von einer Zelle mit einer Intakt-Position aus bis hin zu einer Zelle mit einer totalen Schädigungs-Position als Extremzustands-Zellen reicht, darstellt.

Folgende gegenwärtig angewandte Verfahren zur Erfassung von Zuständen von Zellen in Zellbereichen, insbesondere des Augenhintergrundes liefern charakteristische optische Abbilder:
- der Amsler-Test mit Gitter, bei dem ein aus waagerechten und aus senkrechten Linien bestehendes Gittermuster zur Betrachtung mit einem Auge vorgelegt wird,
- Augenspiegel-Untersuchungen, die mit einer Spaltlampe zur optischen Inspektion des Augenhintergrundes durchgeführt werden, wobei mit der Spaltlampe ausschließlich nur makroskopische Veränderungen detektiert werden können, wobei bei den Augenhintergrund-Untersuchungen mittels Augenspiegel oder Stimlampe die Pupille weitgetropft wird, so dass der Betrachter die Netzhaut mit Hilfe einer Lupe betrachten kann,
- die Fluoreszenzangiographie, bei der eine Farbstoff-Untersuchung durchgeführt wird, bei der ein Kontrastmittel in eine Vene gespritzt und anschließend die Netzhaut fotografiert wird, solange das Kontrastmittel durch die Netzhaut fließt,
- die optische Kohärenztomografie (OCT), bei der mittels optischer Interferenz nur die morphologischen Schichten des Zellbereiches im aktuellen Zustand detektiert werden können und die optische Kohärenztomografie (OCT) dabei die berührungslose Darstellung von Querschnitten der Netzhaut erlaubt.

Die Probleme der genannten Verfahren bestehen darin, dass sie nur eine Unterscheidung von intakten Lebend-Zellen und total geschädigten Tot-Zellen durchführen können. Auch fehlen kostengünstige Vorrichtungen und Verfahren analog zu den Augenspiegel-Untersuchungen, um Zwischenzustände, also aktuell temporäre Zustände der Zellen erfassen zu können.

Eine Alternative dazu bietet das zeitlich und kostenmäßig sehr aufwändige Verfahren mit der Raman-Spektroskopie.

Eine Einrichtung zur in vivo-Spektroskopie der Retina ist in der Druckschrift: E-vans, Chan, Olivier: In vivo-Spectroscopy of the Human Retina, veröffentlicht am 15.08.2008 vom NSF Center for Biophotonics Science & Technology, University sity of California, Davis unter http://cbst.ucdavis.edu/research/, beschrieben, bei der eine Kombination aus optischer Kohärenztomografie (OCT) und aus markerfreien optischen Verfahren, solche wie zeitaufgelöster Autofluoreszenz-Spektroskopie und Raman-Spektroskopie, vorgesehen ist, um einen neuen Aufbau zur Erfassung der Funktion und zur Feststellung von Augenfehlem zu entwickeln.
Die Raman-Spektroskopie gehört wie die Infrarot-Spektroskopie zu den Verfahren der Schwingungsspektroskopie und liefert sehr spezifische Informationen über die molekulare Struktur von Zellen. Bei der Raman-Spektroskopie werden durch einen Laser die Atome in Molekülen einer Zelle zu Schwingungen angeregt. Als Folge der Schwingungen geben die Moleküle Licht ab - das sogenannte Ramanstreulicht. Die spektrale Zerlegung des Ramanstreulichtes ermöglicht eine eindeutige Identifizierung der molekularen Struktur der Zellen.
In der genannten Einrichtung ist ein Raman-Spektrometer in eine OCT-Vorrichtung eingebaut. Dabei werden Raman-Spektren und korrespondierende OCT-Volumendaten erhalten. Die Einrichtung kann über eine zugehörige Auswerteeinheit Spektren unterscheiden und biochemische Daten von unterschiedlichen Schichten der Zellbereiche über eine Anzeigeeinheit anzeigen.

Ein Problem besteht darin, dass der technische Aufwand zur Durchführung der Raman-Spektroskopie und die Anfälligkeit auf Störungen durch polydisperse Gewebe und Fluoreszenz erheblich sind. Außerdem werden für die Aufnahme eines kompletten Ramanspektrums meist mehrere Minuten benötigt. Durch die notwendige hohe Intensität des eingesetzten Lasers kann es auch zu Schädigung des Gewebes kommen.

Eine andere Einrichtung enthält eine Kombination aus Mikroskopie (Videoverstärkte Kontrast-Mikroskopie) und aus Spektrophotometrie (die die Spektren aus dem Mikroskopie-Bild analysiert), wobei die Einrichtung in der Druckschrift Funk, Höper, Dramm und Hofer: Electronic light microscopy combined with spectrophotometry allows real-time analysis of structures at the subcellular level, Physiol. Meas. 19, 225-233, 1998, beschrieben ist. Die Einrichtung erlaubt die in vivo lichtmikroskopische Betrachtung von zellularen und subzellularen Strukturen ebenso wie eine gleichzeitige online-Bestimmung von zellularen Chromophoren. Es werden dabei die Spektren von isolierten roten Blutzellen und NG 108-15-Zellen gemessen und die gemessenen Spektren werden mit dem korrespondierenden videoverstärkten Mikroskop-Bild korreliert. Durch die Markierung von spezifischen Zellorganellen von Astrozyten mit in vivo fluoreszierenden Farbstoffen können Mitochondrien betrachtet und die korrespondierenden Spektren erfasst werden.

In dem Dokument US 2005/273011 A1 ist eine multispektrale Bildgebung für quantitativen Kontrast von funktionellen und strukturellen Eigenschaften der Schichten in optisch dichten Medien, solche wie Gewebe beschrieben. Die Untersuchungen erfolgen im sichtbaren und im nahen Infrarot. Die Vorrichtung umfasst eine Lichtquelle, einen Beleuchter/Kollektor, wahlweise einen Beleuchtungs-Wellenlängenselektor, wahlweise einen Prozessor, des Weiteren eine Abbildungseinrichtung, detektiert von einem Wellenlängenselektor, einen Kontroller und einen Analysator und eine Anzeigeeinheit. Die Vorrichtung beleuchtet die Probe im sichtbaren bis in den nahen Infrarot-Spektralbereich mit mehreren Wellenlängen. Die Probe absorbiert einen Teil des Lichtes, während ein großer Teil des Lichtes diffus gestreut in der Probe ist, die das Licht in alle Richtungen streut. Ein Teil des tief eindringenden Streulichts tritt aus der Probe aus und kann in bildgebender Weise unter Verwendung einer Wellenlängen-Auswahl mittels eines optischen Abbildungssystems erfasst werden. Das Licht des Gewebes, das detektiert wird, enthält spektrale Informationen im Zusammenhang mit verschiedenen Komponenten des Gewebes. Die aufgenommenen Spektren und Bilder werden ausgewertet und in nahezu Echtzeit werden funktionelle und strukturelle Informationen des Zielgewebes charakterisiert.

Die multispektrale Bildgebung geht hauptsächlich auf die Wellenlängenspektren des Hämoglobins (Oxy- bzw. Desoxy-) ein und das hauptsächlich von Probenmaterial aus Blut z.B. in der Haut. Deshalb wird auch der Infrarot-Bereich bevorzugt. Das Dokument US 2005/273011 A1 betrifft zwar ein multispektrales, aber kein spektroskopisches Imagingsystem für rein technische Aufgaben. Es sind weder Angaben/Beschreibungen zur Untersuchung des Stresszustandes von Zellen noch zur verfahrensschrittmäßigen Seite der multivariaten Auswertung enthalten. Nur einige wenige Wellenlängen können mit dem "Wavelength Selector" sequentiell erfasst werden. Damit lassen sich statistische Verfahren der Varianzanalyse nicht einsetzen und somit auch keine kleinen Signale gewinnen.
Es werden definitiv keine Untersuchungen von Zellen durchgeführt.

In dem Dokument US 2008/240539 A1 wird ein Verfahren zur Bestimmung und Analyse von photometrischen und morphogenetischen Eigenschaften von Zellen beispielsweise zum Identifizieren von unterschiedlichen Zellzuständen beschrieben. Insbesondere sind Verfahren zur Identifizierung von Apoptose-Zellen vorgesehen und zur Unterscheidung von Zellen, die gegenüber der Apoptose eine Nekrose aufweisen.
Es werden zwar die Begriffe "Apoptose" und "Nekrose" als Zustand von Zellen erwähnt - aber es geht im Verfahren um sehr schnelle, durch ein System sich bewegende Einzel-Zellen - also um Durchflusszytometrie.

In einem weiteren Dokument US 2008/240539 A1 ist ein optisches Bildgebungssystem zur Erkennung/Bewertung von Zellen beschrieben. Es geht in dem Verfahren aber nur um morphologische Parameter bzw. Merkmale, jedoch nicht um biochemische Größen. Ähnlich wie in einem der vorhergehenden Dokument US 2005/273011 A1 werden keine spektroskopischen, sondern bestenfalls nur multispektrale Messungen beschrieben.

Des Weiteren ist in dem Dokument US 6 276 798 B1 ein Bio-Bildgebungs-Verfahren zur Verbesserung von physiologischen, metabolischen und gesundheitsbezogenen spektralen Merkmalen eines Augengewebes.
Das Verfahren umfasst die Schritte
- Bereitstellen eine optischen Vorrichtung zur optischen Augenuntersuchung, die mit einer spektralen Abbildungseinrichtung verbunden ist,
- Beleuchten des Augengewebes mit Licht über die Iris zum Anschauen des Augengewebes mittels der optischen Vorrichtung und des Spektrometers, erhaltend ein Licht-Spektrum für jedes Pixel des Augengewebes und
- Zuordnung einer Farbe oder einer Intensität zu jedem der Pixel gemäß dem spektralen Merkmal, um dadurch ein Bild der Verbesserung der spektralen Merkmale des Augengewebes zu erreichen.

In dem Bio-Bildgebungs-Verfahren werden vor allem die Augengefäße angesprochen und Verfahren zur Erfassung angegeben. Diese Verfahren sind bekannt, auch die Gefäßsituation im Auge. Es handelt sich dabei hauptsächlich um Erfassung von Durchblutungsparametern. Andere Cytochrome werden allenfalls gestreift, aber es wird nicht beschrieben, wie ihr Zustand jeweils festgestellt und gegenüber einem Zellzustand eingeordnet werden soll.
Das Problem liegt vor allem in der übergroßen allgemeinen Beschreibung. Es wird auf alles Erdenkliche ein Anspruch erhoben. Erwähnt werden alle gängigen optischen Verfahren (Fluoreszenz, Absorption bis hin zu Raman) und alle biochemischen Substanzklassen. Auch Cytochrome sind mit aufgeführt.
Im Bio-Bildgebungs-Verfahren wird nichts zu der spektroskopischen Erkennung des Oxidationszustandes von Cytochrom-c gesagt und folglich fehlen daraus auch die Rückschlüsse auf den oxidativen Stress von Zellen.

Es fehlt gegenwärtig eine kostengünstige und universelle Vorrichtung mit einer schnell arbeitenden Auswerteinheit und ein zugehöriges Verfahren als Alternative zu den kostenintensiven und aufwendigen Laborgeräten einschließlich der Raman-Spektroskopie. Eine marktgerechte und zugleich aus Anwendersicht effiziente Vorrichtung erfordert deshalb sensitive und zugleich kostengünstige Systeme für den Einsatz analog zum Standardaugenspiegel.

Der Erfindung liegt deshalb die Aufgabe zugrunde, ein Verfahren und eine Vorrichtung zur Bestimmung des aktuellen Zustandes von Zellen in Zellbereichen anzugeben, die derart geeignet sind, dass der Verlauf von Degenerationsprozessen von Zellen des Zellbereiches von Anfang an und in jedem zeitlich veränderlichen Zwischenzustand erkannt und bestimmt werden kann.

Die Aufgabe wird mittels der Merkmale der Patentansprüche 1 und 6 gelöst.

Das Verfahren zur Bestimmung des aktuellen Zustandes von Zellen in Zellbereichen, die ungeschädigte intakte Zellen, teilgeschädigte Zellen und/oder total geschädigte Zellen aufweisen können, wobei der aktuelle Zustand einer Zelle durch eine Kombination aus Einzelzuständen morphologischer Struktur und aus biochemischem Zustand der Zelle zum gleichen Zeitpunkt definiert ist und den Zustand der Zelle mit einer Zustandsposition in einer Existenzzustandsskala, die von einer Zelle mit einer ungeschädigten Intakt-Position aus bis hin zu einer Zelle mit einer totalen Schädigungs-Position als Extremzustands-Zellen reicht, darstellt;
weist gemäß dem Kennzeichenteil des Patentanspruchs 1
folgende Schritte auf:
- erster Schritt: Abtasten und/oder Aufnehmen eines spektroskopischen Bildes des Zellbereiches mit einer Pixel-Spektralkamera zumindest über ein Mikroskop,
- zweiter Schritt: Umwandlung der Bilder der Pixel-Spektralkamera in digitalisierte Datensätze,
- dritter Schritt: Speicherung der digitalisierten Datensätze in einer der Pixel-Spektralkamera nachgeordneten Speichereinheit,
- vierter Schritt: Verarbeitung und Auswertung der aus der Speichereinheit übernommenen Datensätze in einer Auswerteeinheit,
- fünfter Schritt: Anzeigen des ausgewerteten Zellbereiches in einer mit der Auswerteeinheit in Verbindung stehenden Anzeigeeinheit.
wobei folgende Schritte in der Auswerteeinheit durchgeführt werden:
- sechster Schritt: Bestimmung des Zustandes der Zellformen und des Zellaufbaus der Zellen aus den Datensätzen als definierbare den Zellzuständen zugeordnete morphologische Struktur-Informationen,
- siebenter Schritt: Ermittlung von Absorptionsbanden in einem Wellenlängenbereich, in dem zumindest eine Extinktion E(λ) von Cytochrom-c vorhanden ist, aus den Datensätzen,
- achter Schritt: Ermittlung der Ausbildung und der Veränderung von Intensität und Wellenlänge von charakteristischen Absorptionsbanden von zustandsveränderten Zellen gegenüber einer Referenz-Absorptionsbande der intakten Zellen durch das erfasste Cytochrom-c als definierbare dem Zellzustand zugeordnete biochemische Absorptions-Daten,
- neunter Schritt: Kombination aus den morphologischen Struktur-Informationen und aus den biochemischen Absorptions-Daten in einer Korrelationseinheit zur Darstellung des aktuellen Zustands der Zellen und
- zehnter Schritt: Übertragung des aktuellen Zustands der Zellen in die Anzeigeeinheit,
wobei aus der Auswerteeinheit in die Anzeigeeinheit der Zustand der Zellen in ihrem Zellaufbau und in ihrer Zellform und spektroskopisch lokalisierte Areale des Zellbereiches mit den molekular veränderten Oxidationszuständen des Cytochrom-c ausgegeben werden, wobei aus dem Vergleich der charakteristischen Absorptionsbande und der Referenz-Absorptionsbande zumindest Veränderungen der Oxidationszustände des Cytochrom-c abgelesen werden, aus denen der aktuelle Zustand einer Zelle abgeleitet werden kann.

Die gespeicherten spektralen Datensätze werden in einer Bildaufbereitung/Verarbeitung einer Vorbehandlung unterworfen, bei der eine Eliminierung von Störungen erfolgt, an die sich eine Hauptkomponentenanalyse anschließt, bei der eine Unterteilung in mehrere die den aktuellen Zustand bestimmenden Komponenten erfolgt, wobei die Komponenten die morphologischen Struktur-Informationen, die biochemischen Absorptions-Daten und andere Signal-Informationen darstellen, wobei zumindest die morphologischen Struktur-Informationen und die biochemischen Absorptions-Daten einer Linearen-Diskriminanz-Analyse (LDA) zugeführt werden, bei der ein Vergleich mit vorab gespeicherten Spektren aus einem als Datenbank ausgebildeten Trainingsset für eine nachfolgende Klassifizierung durchgeführt wird, so dass in der Auswertung als Ergebnis eine Kombination aus morphologischen Struktur-Informationen und aus biochemischen Absorptions-Daten zur Bestimmung des aktuellen Zustands der Zellen erreicht wird.

Es werden folgende Schritte detaillierter durchgeführt:
- Aufnahme eines spektroskopischen Bildes durch Aufnahme von mehreren tausend vollständigen Absorptionsspektren von Zellen oder Zellbereichen,
- Erfassung der Verteilung E(λ) von Cytochrom-c,
- Zuordnung der Verteilung E(λ) vorgegebener Zellareale,
- Lokalisierung der Zellareale mit veränderten Oxidationszuständen von Cytochrom-c,
- Erkennung von Zellen in ihrem aktuellen Zustand und Bestimmung der Zellen, die vom intakten Zustand abweichen,
- Kombination aus biochemischen Informationen und aus morphologischen Informationen zur Erkennung zellulärer Veränderungen.

Die Extinktions-Wellenlängen-Kurve E(λ) als erstes Spektrum von intakten Zellen von im nicht geschädigten Zustand vorhandenen Zellbereichen und die Extinktions-Wellenlängen-Kurve E(λ) als zweites Spektrum von zumindest teilgeschädig\ ten Zellen im aktuellen Zustand werden aufgenommen und danach miteinander verglichen.

Dabei findet ein Vergleich der in beiden unterschiedlichen Extinktions-Wellenlängen-Kurven E(A) der beiden Spektren vorhandenen Referenz-Absorptionsbande, die elektronischen Übergänge des oxidierten Cytochrom-c bei 540nm darstellt, wobei bei fortgeschrittener Oxidation der elektronischen Übergang deutlich schwächer ausgeprägt ist, statt und ein weiterer Vergleich der in beiden Extinktions-Wellenlängen-Kurven E(λ) vorhandenen ersten charakteristischen Absorptionsbande bei ca. 525 nm und der zweiten charakteristischen Absorptionsbanden bei ca. 550 nm findet statt, die beim Verlauf des durch das reduzierte Cytochrom-c veränderten zweiten Spektrums verstärkt registrierbar sind.

Neueste technische Entwicklungen gestatten nun auch die Aufnahme eines spektroskopischen Bildes. Dabei werden gleichzeitig mehrere tausend vollständige Absorptionsspektren aufgenommen. Anhand der spektroskopischen Bilder lässt sich die Verteilung (Extinktions-Wellenlängen-Kurve E(λ)) von Cytochrom-c erfassen und den im Mikroskop bestimmten Zellarealen zuordnen. Mittels der spektroskopischen Bildgebung lassen sich Areale mit veränderten Oxidationszuständen des Cytochrom-c in den Mitochondrien lokalisieren. Dies gibt Hinweise auf den Belastungszustand der Zellen. Der Belastungszustand liegt oft in einem fünktionsarmen bzw. funktionslosen Übergang auf der Existenzzustandsskala zwischen erstens lebend, aber zweitens noch zur funktionierenden Zelle wieder reaktivierbar und drittens schon in Richtung des Zelltods orientiert. Genau die im Übergangszustand befindlichen Zellen, die noch lebend und auch noch reaktivierbar sind, können mit dem erfindungsgemäßen spektroskopischen Verfahren erkannt werden.

Eine Vorrichtung zur Bestimmung des aktuellen Zustandes von Zellen in Zellbereichen, die ungeschädigte intakte Zellen, teilgeschädigte Zellen und/oder total geschädigte Zellen aufweisen können, wobei der aktuelle Zustand einer Zelle durch eine Kombination aus Einzelzuständen morphologischer Struktur und aus biochemischem Zustand der Zelle zum gleichen Zeitpunkt definiert ist und den Zustand der Zelle mit einer Zustandsposition in einer Existenzzustandsskala, die von einer Zelle mit einer ungeschädigten Intakt-Position aus bis hin zu einer Zelle mit einer totalen Schädigungs-Position als Extremzustands-Zellen reicht, darstellt, unter Einsatz des vorgenannten Verfahrens,
wobei gemäß dem Kennzeichenteil des Patentanspruchs 6
die Vorrichtung zumindest enthält
- eine Kamera in Form einer Pixel-Spektralkamera, die die Intensität des von den Zellen des Zellbereiches reflektierten Lichts registriert und die mit einem Mikroskop in Verbindung steht,
- eine der Pixel-Spektralkamera nachgeschaltete computer- und programmtechnisch gestützte Auswerteeinheit zumindest für eine Bildaufbereitung, wobei der Auswerteeinheit zumindest eine Speichereinheit zur Speicherung von Datensätzen aus den vielen aufgenommenen Bildern des Zellbereiches zugeordnet ist,
- eine der Auswerteeinheit nachgeordnete Anzeigeeinheit,
wobei die Anzeigeeinheit den Zustand der Zellen in ihrem Zellaufbau und in ihrer Zellform und insbesondere spektroskopisch lokalisierte Areale des Zellbereiches mit veränderten Oxidationszuständen des Cytochrom-c ausgibt, aus denen aktuelle Zustände der Zellen ableitbar sind, wobei daraus Veränderungen der Zellen zwischen verschiedenen Zustandsformen, insbesondere beim Übergang vom intakten Zustand in den totalgeschädigten Zustand indizierbar sind.

Die Vorrichtung kann ein mit einer Verschiebeeinrichtung versehenes Mikroskop enthalten.

Die computer- und programmtechnisch gestützte Auswerteeinheit kann zumindest folgende Funktionseinheiten enthalten:
- eine erste Funktionseinheit zum Verarbeiten des erfassten Lichts der Zellen in Datensätzen aus der Speichereinheit,
- eine zweite Funktionseinheit zur Bestimmung des Zustandes der Zellformen und des Zellaufbaus der Zellen aus den Datensätzen als definierbare den Zellzuständen zugeordnete morphologische Struktur-Informationen,
- eine dritte Funktionseinheit zur Ermittlung einer Referenz-Absorptionsbande in einem Wellenlängenbereich, in dem zumindest die Extinktion E(A) von Cytochrom-c für intakte Zellen des Zellbereiches vorhanden ist, aus den Datensätzen,
- eine vierte Funktionseinheit zur Ermittlung von charakteristischen Absorptionsbanden in einem Wellenlängenbereich, in dem zumindest die Extinktion E(A) von Cytochrom-c für zumindest teilgeschädigte Zellen des Zellbereiches vorhanden ist, aus den Datensätzen und
- eine Vergleichseinheit zur Ermittlung der Veränderung von Intensität und Wellenlänge der charakteristischen Absorptionsbanden der Zellen gegenüber der Referenz-Absorptionsbande der intakten Zellen durch das erfasste Cytochrom-c als definierbare dem Zellzustand zugeordnete biochemische Absorptions-Daten aus der dritten Funktionseinheit und aus der vierten Funktionseinheit,
wobei die Ergebnisse der zweiten Funktionseinheit und der Vergleichseinheit in einer Korrelationseinheit zusammengeführt sind, in der eine Kombination aus den morphologischen Struktur-Informationen und aus den biochemischen Absorptions-Daten stattfindet, wobei die Korrelationseinheit über die mit ihr verbundene Anzeigeeinheit einen umfassenden aktuellen Zustand der Zellen des Zellbereiches zur Anzeige bringt.

Die Funktionseinheiten, die Vergleichseinheit und die Korrelationseinheit können Hardwareeinheiten und programmtechnische Mittel darstellen, die untereinander in Verbindung stehen, um das genannte Verfahren zu realisieren.

Die Vorrichtung kann auch eine als Mikroskop einschließlich der Verschiebeeinrichtung ausgebildete Standard-Spaltlampe aufweisen, die vor einem Auge positioniert ist, wobei zur mikroskopischen Spaltlampe ein dispersives Mittel, vorzugsweise ein Interferometer gehört, an das strahlungstechnisch eine Pixel-Spektralkamera angeschlossen ist, die mit einer in einem Personal-Computer enthaltenen Auswerteeinheit in Verbindung steht, wobei sich die vier Funktionseinheiten, die Vergleichseinheit und die Korrelationseinheit in der Auswerteeinheit des Personalcomputers befinden können und die dem Personal-Computer zugeordnete Anzeigeeinheit den Bildschirm des Personal-Computers darstellen kann. Eine Verwendung der Vorrichtung und des Verfahrens zur Bestimmung des aktuellen Zustandes von Zellen in Zellbereichen kann im Augenhintergrund, insbesondere zur spektroskopischen Bildgebung der Makula in der Netzhautregion von Augen, wobei aus dem Vergleich der Spektren zumindest molekulare Veränderungen des Cytochrom-c als Marker ablesbar sind, durchgeführt werden.

Eine andere Verwendung der Vorrichtung und des Verfahrens zur Bestimmung des aktuellen Zustandes von Zellen in Zellbereichen kann in Zellbereichen der Haut vorgesehen werden.

Eine weitere Verwendung der Vorrichtung und des Verfahrens zur Bestimmung des aktuellen Zustandes von Zellen kann in Zellbereichen der Schleimhaut stattfinden.

Die Erfindung stellt ein optisches Verfahren zur nichtinvasiven Darstellung des vorgegebenen Zellbereiches, einem Abbild der momentanen Zell- bzw. Gewebefunktion, dar, wobei als Parameter und Indikator die oxidationsbedingte Veränderung der spektralen Absorptionseigenschaften eines Bestandteiles (Cytochrom-c) der Atmungskette fungiert. Darüber hinaus wird die biochemische Information mit Informationen der physikalischen Streueigenschaften (aufgrund der molekularen Morphologie der Zelle) kombiniert, so dass sich ein Werkzeug ergibt, um den Funktionszustand ganzer Zellbereiche (je nach Auflösung bis hinunter zu einzelnen Zellen) zu analysieren.

Die spektroskopische Bildgebung im visuellen und nahinfraroten Spektralbereich liefert Informationen zu biochemischen Prozessen in Zellen, die durch äußere und/oder innere Veränderungen hervorgerufen werden. Aus den Spektren lassen sich insbesondere molekulare Veränderungen des Cytochrom-c sehr sensitiv und spezifisch ablesen. Neben den chemischen Informationen sollen auch die physikalischen Informationen der Spektren zur Auswertung herangezogen werden. Die Intensität des gestreuten Lichtes lässt Veränderungen des Zellaufbaus und der Zellform erkennen, die wiederum eine Folge von Veränderungen sind. Erfindungsgemäß erfolgt eine Kombination der Ergebnisse der biochemischen und morphologischen Informationen bei der Anwendung.

Ziel der Datenkombination ist die sichere Erkennung temporärer zellulärer Veränderungen.

Vorteile der Erfindung bestehen darin, dass zeit- und kostenaufwändige Laboranalysen durch das nichtinvasive erfindungsgemäße Verfahren entfallen.

Ein weiterer Vorteil der Erfindung besteht darin, dass die Erkennung der Zellzustände schmerzfrei und in-vivo durchgeführt werden kann.

Es erfolgt eine Analyse des Cytochrom-c ohne zusätzliche biochemische Marker.

Weiterbildungen und weitere Ausgestaltungen der Erfindungen werden in weiteren Unteransprüchen angegeben.

Die Efindung wird anhand eines Ausführungsbeispiels mittels mehrerer Zeichnungen näher erläutert.

Es zeigen:
- Fig. 1a: eine schematische Darstellung einer erfindungsgemäßen Vorrichtung zur Bestimmung des aktuellen Zustandes von Zellen in einem Zellbereich, insbesondere im Augenhintergrund,
- Fig. 1b: eine Existenzzustandsskala der Zustandspositionen von einer intakten Zelle mit der Lebend-Position aus bis hin zu einer total geschädigten Zelle mit einer Tot-Position als Extremzustands-Zellen,
- Fig. 2: eine schematische Darstellung der Vorrichtung nach Fig. 1 a mit Gerätekomponenten,
- Fig. 3: ein Flussdiagramm des erfindungsgemäßen Verfahrens zur Bestimmung des aktuellen Zustandes von Zellen im vorgegebenen Zellbereich,
- Fig. 4: eine Darstellung von Spektren im ultravioletten und sichtbaren (uv/vis) Spektralbereich von Zellkulturen gleicher Zelllinie mit einer unter optimalen Bedingungen gezüchteten Zellkultur mit intakten Zellen und einer unter gleichen optimalen Bedingungen gezüchteten Zellkultur mit gezielt geschädigten Zellen im sichtbaren Spektralbereich,
- Fig. 5: die korrespondierenden Zustands-Zuordnungen von biochemischen Absorptions-Daten und morphologischen Struktur-Informationen nach der Kombination als Anzeige auf der Anzeigeeinheit, wobei
Fig. 5a die biochemischen Absorptions-Daten in Form von Extinktions-Wellenlängen-Kurven (Spektren) E(λ),
Fig. 5b die unterschiedliche Zellform und der unterschiedliche Zellaufbau von Zellen in den Zuständen bezüglich der in Fig. 1b angegebenen Existenzzustandsskala und
Fig. 5c vergrößerte Ausschnitte der Zellen in den unterschiedlichen Zuständen aus Fig. 5b.
zeigen.

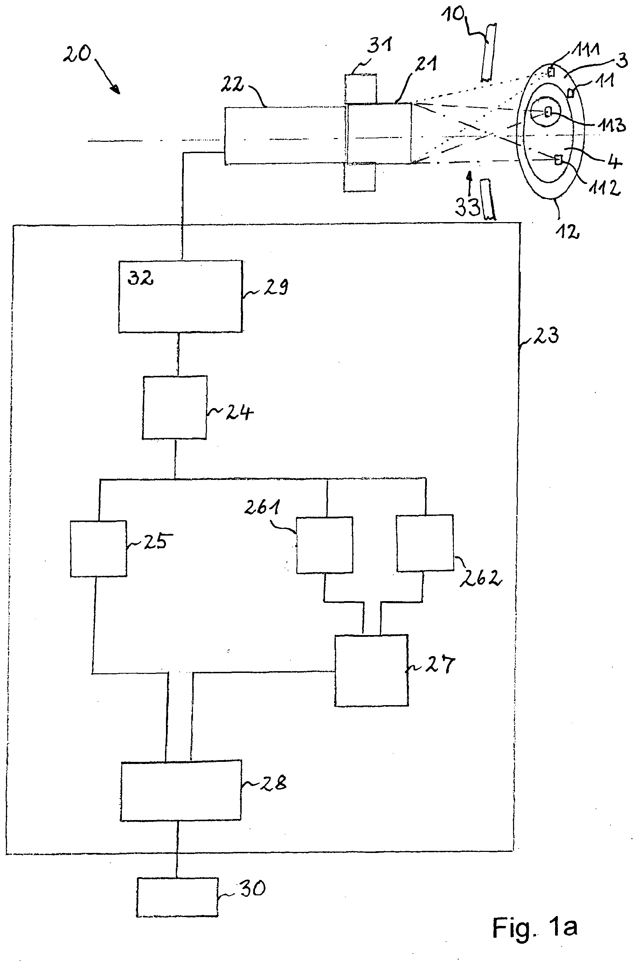

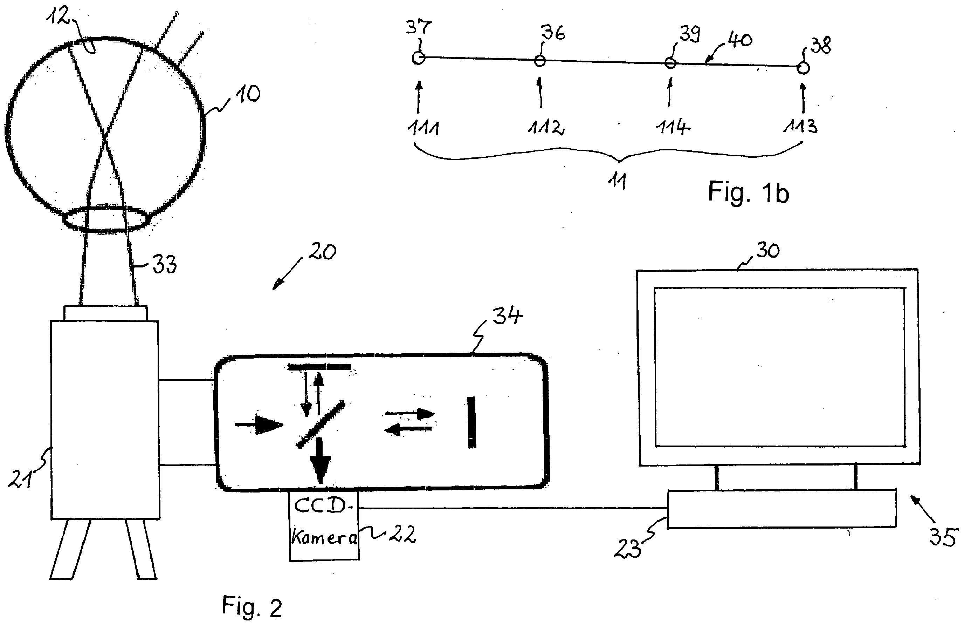

Im Folgenden werden die Fig. 1a und 1b gemeinsam betrachtet.
In Fig. 1a ist eine Vorrichtung 20 zur Bestimmung des aktuellen Zustandes von Zellen 11 in einem Zellbereich 12, vorzugsweise in einem Augenhintergrund 12 schematisch dargestellt, wobei der Augenhintergrund 12, wie auch in Fig. 1b gezeigt ist, intakte ungeschädigte Zellen 111, teilgeschädigte Zellen 112 und/oder total geschädigte Zellen 113 aufweisen kann, wobei der aktuelle Zustand einer Zelle 111, 112, 113 durch eine Kombination aus Einzelzuständen morphologischer Struktur und aus biochemischem Zustand der Zelle 111, 112, 113 zum gleichen Zeitpunkt definiert ist und den Zustand der Zelle 112 mit einer Zustandsposition 36 in einer Existenzzustandsskala 40, die von einer Zelle 111 mit einer ungeschädigten Intakt-Position 37 aus bis hin zu einer Zelle 113 mit einer totalen Schädigungs-Position 38 als Extremzustands-Zellen reicht, darstellt.

Die Vorrichtung 20 weist ein mit einer Verschiebeeinrichtung 31 versehenes Mikroskop 21 und eine zum Erfassen des Streulichts 33 der Zellen 11, 111, 112, 113 des Augenhintergrundes 12 vorgesehene Pixel-Spektralkamera 22 auf. An die Pixel-Spektralkamera 22 ist eine computer- und programmtechnisch gestützte Auswerteeinheit 23 angeschlossen, der eine Speichereinheit 29 zur Speicherung von Datensätzen 32 aus den vielen aufgenommenen Bildern des Augenhintergrundes 12 zugeordnet ist, wobei die Auswerteeinheit 23 mit einer Anzeigeeinheit 30 verbunden ist.

Die computer- und programmtechnisch gestützte Auswerteeinheit 23 enthält zumindest folgende Funktionseinheiten:
- eine erste Funktionseinheit 24 zum Verarbeiten des erfassten Streulichts 33 der Zellen 11, 111, 112, 113 zumindest in Datensätzen 32 der Speichereinheit 29,
- eine zweite Funktionseinheit 25 zur Bestimmung der Veränderung des Zustandes der Zellformen und des Zellaufbaus aus den Datensätzen 32 als definierbare morphologische Struktur-Informationen,
- eine dritte Funktionseinheit 261 zur Ermittlung einer Referenz-Absorptionsbande 13 in einem Wellenlängenbereich, in dem zumindest die Extinktion E(λ) von Cytochrom-c für ungeschädigte intakte Zellen 111 des Augenhintergrundes 12 vorhanden ist, aus den Datensätzen 32,
- eine vierte Funktionseinheit 262 zur Ermittlung von charakteristischen Absorptionsbanden 14, 15 in einem Wellenlängenbereich, in dem zumindest die Extinktion E(A) des Cytochrom-c für geschädigte Zellen 112, 113 des Augenhintergrundes 12 vorhanden ist, aus den Datensätzen 32 und
- eine Vergleichseinheit 27 zur Ermittlung der Veränderung der charakteristischen Absorptionsbanden 14, 15 der geschädigten Zellen 112 oder 113 gegenüber der Referenz-Absorptionsbande 13 von intakten Zellen 111 durch das erfasste Cytochrom-c als definierbare biochemische Absorptions-Daten aus der dritten Funktionseinheit 261 und aus der vierten Funktionseinheit 262,
wobei die Ergebnisse der zweiten Funktionseinheit 25 und der Vergleichseinheit 27 in einer Korrelationseinheit 28 zusammengeführt sind, in der eine Kombination aus den morphologischen Struktur-Informationen und aus den biochemischen Absorptions-Daten stattfindet, wobei die Korrelationseinheit 28 über die mit ihr verbundene Anzeigeeinheit 30 einen umfassenden aktuellen Zustand der Zellen 111, 112, 113 zur Anzeige bringt.

In Fig. 1b ist eine Existenzzustandsskala 40 angegeben, in der der aktuelle Zustand von ausgewählten, auszumessenden Zellen 112, 114 in einer Zustandsposition 36 oder 39 der Existenzzustandsskala 40 angegeben ist, die von einer Zelle 111 mit der Lebend-Position 37 (intakt, ungeschädigt) aus bis hin zu einer Zelle 113 mit einer Tot-Position 38 (total geschädigt) als Extremzustands-Zellen reicht. Es gilt mit der vorliegenden Erfindung, den aktuellen Zustand einer Zelle 111, 112, 114, 113 zu bestimmen, um sie zumindest einer Zustandsposition 36 (teilgeschädigt) oder den anderen Zustandspositionen 37, 38, 39 in Fig. 1b zuordnen zu können:

In Fig. 2 ist eine gerätetechnisch realisierte Vorrichtung 20 dargestellt, die als Mikroskop 21 einschließlich der Verschiebeeinrichtung 31 eine Standard-Spaltlampe aufweist, die vor einem Auge 10 positioniert ist, wobei das reflektierte Streulicht zur Gewinnung der morphologischen Struktur-Informationen der Zellen 111, 112, 114,113 dient. Zur mikroskopischen Spaltlampe 21 gehört auch ein Interferometer 34, an das eine Pixel-Spektralkamera (CCD-Kamera) 22 zur Gewinnung von biochemischen Absorptions-Daten der Zellen 111, 112, 114, 113 angeschlossen ist, wobei die Spektralkamera 22 mit der in einem PersonalComputer 35 enthaltenen Auswerteeinheit 23 in Verbindung steht, wobei dem Personal-Computer 35 die Anzeigeeinheit 30 zugeordnet ist.

Die Funktionseinheiten aus Fig. 1a befinden sich in der Auswerteeinheit 23 des Personalcomputers 35. Die Anzeigeeinheit 30 kann den Bildschirm des PersonalComputers darstellen.

Die Funktionseinheiten 24, 25, 261 und 262, die Vergleichseinheit 27 und die Korrelationseinheft 28 stellen Hardwareeinheiten und programmtechnische Mittel dar, die untereinander in Verbindung stehen, um das erfindungsgemäße Verfahren zu realisieren.

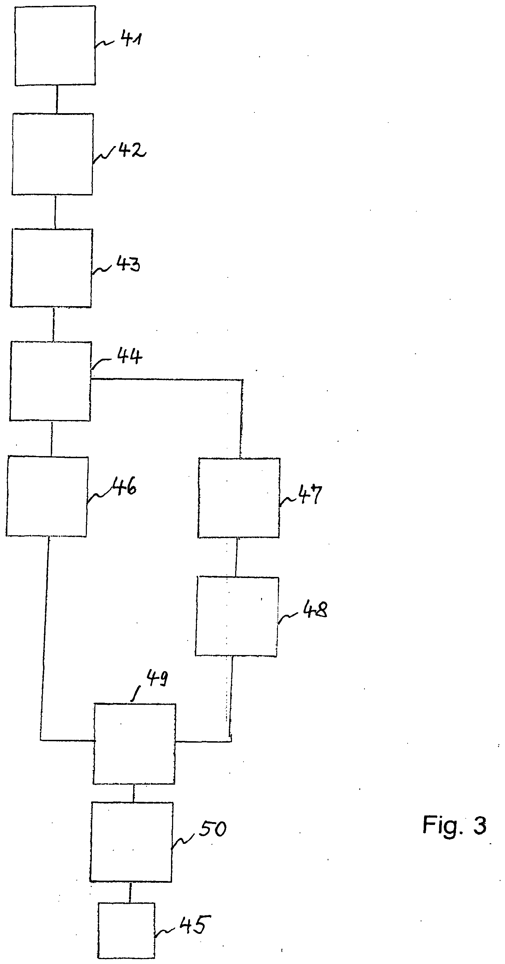

In Fig. 3 ist ein Flussdiagramm des erfindungsgemäßen Verfahrens zur Bestimmung des aktuellen Zustandes von Zellen 11, 111, 112, 114, 113 in einem vorgegebenen großen Zellbereich 12, insbesondere im Zellbereich eines Augenhintergrundes angegeben, wobei folgende Schritte durchgeführt werden:
- erster Schritt 41: Abtasten und/oder Aufnehmen einer Vielzahl von Bildern des Augenhintergrundes 12 mit einer Pixel-Spektralkamera 22 über ein Mikroskop 21,
- zweiter Schritt 42: Umwandlung der Bilder der Pixel-Spektralkamera 22 in digitalisierte Datensätze 32,
- dritter Schritt 43: Speicherung der digitalisierten Datensätze 32 in einer der Pixel-Spektralkamera 22 nachgeordneten Speichereinheit 29,
- vierter Schritt 44: Verarbeitung und Auswertung der aus der Speichereinheit 29 übernommenen Datensätze 32 in einer Auswerteeinheit 23 und
- fünfter Schritt 45: Anzeigen des ausgewerteten Augenhintergrundes 12 in einer mit der Auswerteeinheit 23 in Verbindung stehenden Anzeigeeinheit 30.

Dabei werden folgende detaillierte Schritte in der Auswerteeinheit 23 durchgeführt:
- sechster Schritt 46: Bestimmung des Zustandes der Zellformen und des Zellaufbaus der Zellen 11, 111, 112, 114, 113 aus den Datensätzen 32 als definierbare morphologische Struktur-Informationen,
- siebenter Schritt 47: Ermittlung von Absorptionsbanden 13, 14, 15 in einem Wellenlängenbereich, in dem zumindest eine Extinktion E(A) von Cytochrom-c vorhanden ist, aus den Datensätzen 32,
- achter Schritt 48: Ermittlung der Ausbildung und Veränderung von charakteristischen Absorptionsbanden 14, 15 von veränderten Zellen 112, 114, 113 gegenüber der Referenz-Absorptionsbande 13 der intakten Zellen 111 durch das erfasste Cytochrom-c als definierbare biochemische Absorptions-Daten aus den Datensätzen,
- neunter Schritt 49: Kombination aus den morphologischen Struktur-Informationen und aus den biochemischen Absorptions-Daten in einer Korrelationseinheit 28 zur Erzeugung eines umfassenden aktuellen Zustands der Zellen 11, 111, 112, 113 und
- zehnter Schritt 50: Übertragung des umfassenden aktuellen Zustands der Zellen 11, 111, 112, 114,113 des Augenhintergrundes 12 in die Anzeigeeinheit 30.

Die in der Auswerteeinheit 23 durchgeführten Verfahrensschritte können mit programmtechnischen Mittels gesteuert werden.

Die gespeicherten spektralen Datensätze 32 werden in einer Bildaufbereitung/Verarbeitung einer Vorbehandlung unterworfen, bei der eine Eliminierung von Störungen erfolgt, an die sich eine Hauptkomponentenanalyse anschließt, bei der eine Unterteilung in die den aktuellen Zustand bestimmenden Komponenten erfolgt, wobei die Komponenten die morphologischen Struktur-Informationen, die biochemischen Absorptionsdaten und andere Signal-Informationen darstellen, wobei zumindest die morphologischen Struktur-Informationen und die biochemischen Absorptions-Daten einer Linearen-Diskriminanz-Analyse (LDA) zugeführt werden, bei der ein Vergleich mit vorab gespeicherten Spektren für eine Zuordnung aus einem Trainingsset durchgeführt wird, so dass in der Auswertung 44 als Ergebnis eine Kombination aus morphologischen Struktur-Informationen und aus biochemischen Absorptions-Daten zur Bestimmung des aktuellen Zustands der Zellen erreicht wird.

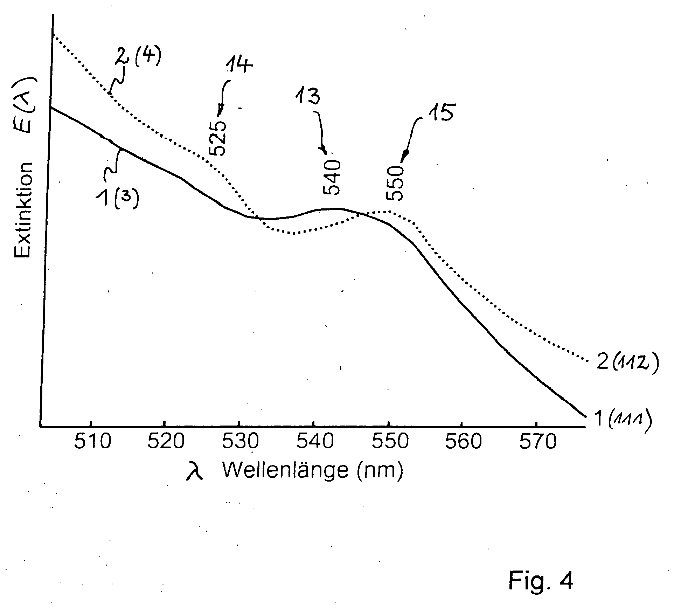

In Fig. 4 ist nach einer Untersuchung an gezüchteten Zellkulturen 3,4 anstelle von gleichen Zellen 111, 112 des Augenhintergrundes 12 eine Darstellung von Spektren im ultravioletten und sichtbaren Spektralbereich von Zellkulturen gleicher Zelllinie mit einer unter optimalen Bedingungen gezüchteten Zellkultur 3 und einer unter optimalen Bedingungen gezüchteten Zellkultur 4 mit gezielter Schädigung gezeigt, wobei festgelegt wird, dass die Zellkultur 3 den intakten Zellen 111 in Fig. 1a und die Zellkultur 4 den wenig oder total geschädigten Zellen 112 in Fig. 1a entsprechen.
Die Registrierung von Absorptionsspektren 1,2 im sichtbaren Spektralbereich ermöglicht zugleich eine Charakterisierung der Streueigenschaften von Zellen 111, 112. Mit einer einzigen Messung können mehrere Parameter für die Bestimmung des aktuellen Zustandes der Zellen 111, 112 gewonnen werden. Die Fig. 4 zeigt ein E,λ-Extinktions-Wellenlängen-Koordinatensystem und die zwei sich darin befindenden Spektren 1 und 2 der zwei Zellkulturen 3 und 4 im Wellenlängenbereich zwischen 510 nm und 570 nm. Das erste Spektrum 1 (durchgezogen) stammt von Zellen der ersten Zellkultur 3, die den intakten Zellen 111 in Fig. 1a zugeordnet werden können und die unter optimalen Bedingungen kultiviert wurden. Die zweite Zellkultur 4 mit den gezüchteten Zellen wurde zunächst ebenfalls unter gleichen optimalen Bedingungen gezüchtet. Anschließend wurden die Zellen mit die Zellen belastendem Glyoxal in Berührung gebracht und geschädigt, wobei die Zellen in etwa den wenig oder mehr geschädigten Zellen 112 entsprechen. Das zweite Spektrum 2 (gepunktet) der teilgeschädigten Zellkultur 4 mit den Zellen 112 zeigt deutliche Kurvenunterschiede zu den intakten Zellen 111 ersten Zellkultur 3.
Für die totalgeschädigte Zelle 113 ist schließlich kaum ein Spektrum (Extinktions-Wellenlängen-Kurve) oder kein Spektrum aufnehmbar, da sich die Zelle 113 dann aufgelöst hat

Auffällig ist zunächst bei beiden Spektren 1 und 2 eine Zunahme der gemessenen Extinktion E(A) mit kleiner werdender Wellenlänge λ in Richtung 510 nm. Dieser Verlauf ist typisch für Streulichtprozesse und beruht unter anderem auf einer veränderten Zellform. Das erste Spektrum 1 der intakten nicht geschädigten Zellen 111 zeigt eine geringere Extinktion E(A) im Vergleich zum Spektrum 2 auf und und eine Referenz-Absorptionsbande 13 bei 540nm. Die Referenz-Absorptionsbande 13 stammt von elektronischen Übergängen des oxidierten Cytochrom-c. Im zweiten Spektrum 2 ist der elektronische Übergang deutlich schwächer ausgeprägt. Es lassen sich im zweiten Spektrum 2 weitere Absorptionsbanden, eine erste charakteristische Absorptionsbande 13 bei ca. 525 nm und eine zweite charakteristische Absorptionsbande 14 bei ca. 550 nm identifizieren. Die erste charakteristische Absorptionsbande 13 und die zweite charakteristische Absorptionsbande 14 werden durch das reduzierte Cytochrom-c in der geschädigten Zelle 112 hervorgerufen.

Aus der Kombination aus biochemischen Absorptions-Daten und aus morphologischen Struktur-Informationen lassen sich deutlich mehr Informationen gegenüber der einzelnen Anwendung der Verfahren gewinnen. Ziel der Datenkombination ist die sichere Erkennung zellulärer Veränderungen.

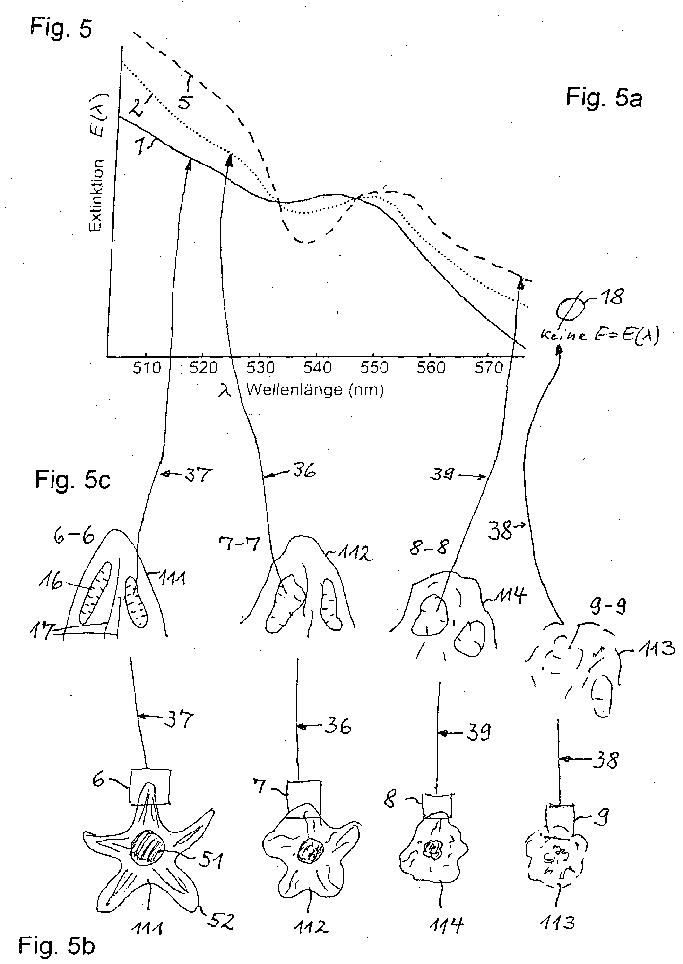

In den Teil-Fig. 5a, Teil-Fig. 5b, Teil-Fig. 5c der Fig. 5 sind die korrespondierenden Zuordnungen von biochemischen Absorptions-Daten und morphologischen Struktur-Informationen von verschiedenen Zellen 111, 112, 114, 113 nach dem Schritt 49 der Kombination als Kombinationsergebnisse als Anzeige auf der Anzeigeeinheit 30 dargestellt, wobei die Teil-Fig. 5a die biochemischen Absorptions-Daten in Form von Extinktions-Wellenlängen-Kurven (Spektren) E(A), die Fig. 5b die unterschiedliche Zellform und der unterschiedliche Zellaufbau der Zellen 111, 112, 114, 113 in den verschiedenen Zuständen 37, 36, 39, 38 bezüglich der in Fig. 1b angegebenen Existenzzustandsskala 40 zeigen.
Die Teil-Fig. 5c zeigt vergrößerte Ausschnitte der Zellen 111, 112, 114, 113 aus der Teil-Fig. 5b.

Die Teil-Fig. 5a zeigt die biochemischen Informationen/Absorptions-Daten bezüglich der Cytochrom-c-Spektren, wobei
- das Spektrum 1 (Extinktions-Wellenlängen-Kurve) einer intakten Zelle 111,
- das Spektrum 2 (Extinktions-Wellenlängen-Kurve) einer teilgeschädigten Zelle 112, die eine funktionsarme, aber reaktivierbare Zelle darstellt,
- das Spektrum 5 (Extinktions-Wellenlängen-Kurve) einer fortgeschritten teilgeschädigten Zelle 114, die eine wahrscheinlich reaktivierbare, wahrscheinlich in Richtung des Zelltodes gehende Zelle darstellt, und
- das Referenzspektrum 18 einer totalgeschädigten Zelle 113, die eine kurz vor dem Zelltod stehende oder schon zelltote Zelle ist, für die keine Extinktions-Wellenlängen-Kurve mehr aufnehmbar ist,
gezeigt werden.

In der Teil-Fig. 5b sind die Gesamtbilder der Zellen in ihren Zuständen 37, 36, 39, 38 gezeigt, die die morphologischen Struktur-Informationen darstellen, wobei
- die intakte Zelle 111 des Zustandes 37 klare Konturen auch des Zellkerns 51 und der umgebenden Zellmembran 52 zeigt,
- die teilgeschädigte Zelle 112 des Zustandes 36 erste Unregelmäßigkeiten im Bereich des Zellkerns 51 und der Zellmembran 52 aufweist,
- die fortgeschritten teilgeschädigte Zelle 114 des Zustandes 39 starke Unregelmäßigkeiten im Bereich des Zellkerns 51 und der Zellmembran 52 hat und
- die totalgeschädigte Zelle 113 des Zustandes 38 Auflösungserscheinungen des Zellkerns 51 und der Zellmembran 52 und somit eine Diskontinuität besitzt.

In der Teil-Fig. 5c ist jeweils ein vergrößerter Zellen-Ausschnitt 6, 7, 8, 9 für die in Teil-Fig. 5b angegebenen Ausschnitte 6-6 der Zelle 111, 7-7 der Zelle 112, 8-8 der Zelle 114 und 9-9 der Zelle 113 angegeben, wobei
- im Zellen-Ausschnitt 6-6 der intakten Zelle 111 die Zellorganellen (Mitochondrien 16 und Bestandteile 17 des Zytoskeletts) regelmäßig und zugeordnet angeordnet sind,
- im Zellen-Ausschnitt 7-7 der teilgeschädigten Zelle 112 erste Deformierungen der Mitochondrien 16 vorhanden und die Bestandteile 17 innerhalb der Zelle 112 teilweise verkrümmt und verschoben sind,
- im Zellen-Ausschnitt 8-8 der fortgeschritten teilgeschädigten Zelle 114 die Mitochondrien 16 aufgebläht deformiert sind und die Bestandteile 17 zumindest teilweise zerfallen sind und planlos in der Zelle 114 gewandert und gelagert sind, und
- im Zellen-Ausschnitt 9-9 der Zelle 113 die Mitochondrien 16 und die Bestandteile 17 aufgelöst sind und ein Zellorganellen-Chaos besteht sowie der Zellkern 51 aufgelöst ist und die Zellmembran 52 perforiert ist.

Zusammenfassend kann die Erfindung insbesondere zur spektroskopischen Bildgebung der Makula in der Netzhautregion von Augen 10 dienen. Die Vorrichtung 20 enthält, wie oben bereits beschrieben, eine Kamera 22, die die Intensität des von den Zellen 111, 112, 113 des Augenhintergrundes 12 reflektierten Streulichtes registriert. Die nachgeschaltete Auswerteeinheit 23 führt eine Bildaufbereitung durch, aus der in einer Anzeigeeinheit 30 die Veränderungen des Zustandes der Zellen 111, 112, 113 in ihrem Zellaufbau und in ihrer Zellform ausgegeben werden.
Dabei werden insbesondere spektroskopisch lokalisierte Areale der Makula mit den veränderten Oxidationszuständen des Cytochrom-c in den Mitochondrien ausgegeben. Aus dem Vergleich der Spektren 1 und 2 lassen sich insbesondere Veränderungen der Oxidationszustände und die Konzentration des Cytochrom-c als Marker ablesen.

Die Erfindung stellt somit eine Vorrichtung 20 und ein Verfahren zur eindeutigen und schnellen Identifikation von Vitalitätsveränderungen der Zellen 111, 112, 114, 113 zwischen verschiedenen Zustandsformen, insbesondere beim Übergang vom lebenden, intakten Zustand 37 über die teilgeschädigte Zustände 36,39 in den total geschädigten oder schon toten Zustand 38 der Zellen 111, 112, 114, 113 dar.

### Bezugszeichenliste

- 1: erstes Spektrum
- 2: zweites Spektrum
- 3: erste Zellkultur
- 4: zweite Zellkultur
- 5: drittes Spektrum
- 6-6: Zellen-Ausschnitt
- 7-7: Zellen-Ausschnitt
- 8-8: Zellen-Ausschnitt
- 9-9: Zellen-Ausschnitt
- 10: Auge
- 11: Zellen
- 111: intakte Zellen
- 112: teilgeschädigte Zelle
- 113: totalgeschädigte Zelle
- 114: fortgeschritten teilgeschädigte Zelle
- 12: Zellbereich
- 13: Referenz-Absorptionsbande
- 14: erste charakteristische Absorptionsbande
- 15: zweite charakteristische Absorptionsbande
- 16: Mitochondrien
- 17: Bestandteile des Zytoskeletts
- 18: Referenzspektrum einer totalgeschädigten Zelle
- 20: erfindungsgemäße Vorrichtung
- 21: Mikroskop
- 22: Pixel-Spektralkamera
- 23: Auswerteeinheit
- 24: erste Funktionseinheit
- 25: zweite Funktionseinheit
- 261: dritte Funktionseinheit
- 262: vierte Funktionseinheit
- 27: Vergleichseinheit
- 28: Korrelationseinheit
- 29: Speichereinheit
- 30: Anzeigeeinheit
- 31: Verschiebeeinrichtung
- 32: Datensätze
- 33: Streulicht
- 34: dispersives Mittel/Interferometer
- 35: Personalcomputer
- 36: teilgeschädigte Zustandsposition
- 37: ungeschädigte Intakt-Position
- 38: totale Schädigungs-Position
- 39: fortgeschritten teilgeschädigte Zustandsposition
- 40: Existenzzustandsskala
- 41: erster Schritt
- 42: zweiter Schritt
- 43: dritter Schritt
- 44: vierter Schritt
- 45: fünfter Schritt
- 46: sechster Schritt
- 47: siebenter Schritt
- 48: achter Schritt
- 49: neunter Schritt
- 50: zehnter Schritt
- 51: Zellkern
- 52: Zellmembran

## Patentansprüche

1. Verfahren zur Bestimmung des aktuellen Zustandes von Zellen (11, 111, 112, 114, 113) in Zellbereichen (12), die ungeschädigte intakte Zellen (111), teilgeschädigte Zellen (112, 114) und/oder total geschädigte Zellen (113) aufweisen können, wobei der aktuelle Zustand einer Zelle (112, 114) durch eine Kombination aus Einzelzuständen morphologischer Struktur und aus biochemischem Zustand der Zelle zum gleichen Zeitpunkt definiert ist und den Zustand der Zelle (112, 114) mit einer Zustandsposition (36, 39) in einer Existenzzustandsskala (40), die von einer Zelle (111) mit einer ungeschädigten Intakt-Position (37) aus bis hin zu einer Zelle (113) mit einer totalen Schädigungs-Position (38) als Extremzustands-Zellen reicht, darstellt,
**gekennzeichnet durch** folgende Schritte:
- Abtasten und/oder Aufnehmen (41) eines spektroskopischen Bildes des Zellbereiches (12) mit einer Pixel-Spektralkamera (22) zumindest über ein Mikroskop (21),
- Umwandlung (42) der Bilder der Pixel-Spektralkamera (22) in digitalisierte Datensätze (32),
- Speicherung (43) der digitalisierten Datensätze (32) in einer der Pixel-Spektralkamera (22) nachgeordneten Speichereinheit (29),
- Verarbeitung und Auswertung (44) der aus der Speichereinheit (29) übernommenen Datensätze (32) in einer Auswerteeinheit (23),
- Anzeigen (45) des ausgewerteten Zellbereiches (12 in einer mit der Auswerteeinheit (23) in Verbindung stehenden Anzeigeeinheit (30),
wobei folgende Schritte in der Auswerteeinheit (23) durchgeführt werden:
- Bestimmung (46) des Zustandes der Zellformen und des Zellaufbaus der Zellen (11, 111, 112, 114, 113) aus den Datensätzen (32) als definierbare den Zellzuständen zugeordnete morphologische Struktur-Informationen,
- Ermittlung (47) von Absorptionsbanden (13, 14, 15) in einem Wellenlängenbereich, in dem zumindest eine Extinktion E(λ) von Cytochrom-c vorhanden ist, aus den Datensätzen (32),
- Ermittlung (48) der Ausbildung und der Veränderung von Intensität und Wellenlänge von charakteristischen Absorptionsbanden (14, 15) von zustandsveränderten Zellen (112, 114, 113) gegenüber der Referenz-Absorptionsbande (13) der intakten Zellen (111) durch das erfasste Cytochrom-c als definierbare dem Zellzustand zugeordnete biochemische Absorptions-Daten,
- Kombination (49) aus den morphologischen Struktur-Informationen und aus den biochemischen Absorptions-Daten in einer Korrelationseinheit (28) zur Darstellung des aktuellen Zustands (37, 36, 39, 38) der Zellen (11, 111, 112, 114, 113) und
- Übertragung (50) des aktuellen Zustands (37, 36, 39, 38) der Zellen (11, 111, 112, 114, 113) in die Anzeigeeinheit (30).,
wobei aus der Auswerteeinheit (23) in die Anzeigeeinheit (39) der Zustand (37, 36, 39, 38) der Zellen (111, 112, 113, 114) in ihrem Zellaufbau und in ihrer Zellform und spektroskopisch lokalisierte Areale des Zellbereiches (12) mit den molekular veränderten Oxidationszuständen des Cytochrom-c ausgegeben werden, wobei aus dem Vergleich der charakteristischen Absorptionsbande (14, 15) und der Referenz-Absorptionsbande (13) zumindest Veränderungen der Oxidationszustände des Cytochrom-c abgelesen werden, aus denen der aktuelle Zustand (37, 36, 39, 38) einer Zelle (111, 112, 113, 114) abgeleitet werden kann.

2. Verfahren nach Anspruch 1,
**dadurch gekennzeichnet,**
**dass** die gespeicherten spektralen Datensätze (32)
in einer Bildaufbereitung/Verarbeitung (44) einer Vorbehandlung unterworfen werden, bei der eine Eliminierung von Störungen erfolgt, an die sich eine Hauptkomponentenanalyse anschließt, bei der eine Unterteilung in die den aktuellen Zustand bestimmenden Komponenten erfolgt, wobei die Komponenten die morphologischen Struktur-Informationen, die biochemischen Absorptionsdaten und andere Signal-Informationen darstellen, wobei zumindest die morphologischen Struktur-Informationen und die biochemischen Absorptions-Daten einer Linearen-Diskriminanz-Analyse zugeführt werden, bei der ein Vergleich mit vorab gespeicherten Spektren aus einem als Datenbank ausgebildeten Trainingsset für eine Zuordnung/Klassifizierung durchgeführt wird, so dass in der Auswertung (44) als Ergebnis eine Kombination aus morphologischen Struktur-Informationen und aus biochemischen Absorptions-Daten zur Bestimmung des aktuellen Zustands (37, 36, 39, 38) der Zellen (11, 111, 112, 114, 113) erreicht wird.

3. Verfahren nach den Ansprüchen 1 und 2,
**dadurch gekennzeichnet,**
**dass** folgende detaillierte Schritte durchgeführt werden:
- Aufnahme eines spektroskopischen Bildes durch Aufnahme von mehreren tausend vollständigen Absorptionsspektren (13, 14, 15) von Zellen (11, 111, 112, 114, 113) oder Zellbereichen (12),
- Erfassung der Verteilung E(λ) von Cytochrom-c,
- Zuordnung der Verteilung E(A) vorgegebener Zellareale,
- Lokalisierung der Zellareale mit veränderten Oxidationszuständen des Cytochrom-c,
- Erkennung von Zellen (11, 111, 112, 114, 113) in ihrem aktuellen Zustand (37, 36, 39, 38) und Bestimmung der Zellen (112, 114, 113), die vom intakten Zustand (37) der Zellen (111) abweichen,
- Kombination aus biochemischen Daten und aus morphologischen Informationen zur Erkennung zellulärer Veränderungen in den Zellen (112, 114, 113).

4. Verfahren nach den Ansprüchen 1 bis 3,
**dadurch gekennzeichnet,**
**dass** eine Extinktions-Wellenlängen-Kurve E(A) als erstes Spektrum (1) von intakten Zellen (111) von im nicht geschädigten Zustand vorhandenen Zellbereichen (12) und eine Extinktions-Wellenlängen-Kurve E(λ) als anderes Spektrum (2, 5) von zumindest teilgeschädigten Zellen (112, 114, 113) im aktuellen Zustand (37, 36, 39, 38) aufgenommen und miteinander verglichen werden.

5. Verfahren nach Anspruch 4,
**dadurch gekennzeichnet,**
**dass** der Vergleich der in beiden Extinktions-Wellenlängen-Kurven E(λ) (1, 2; 1, 5) vorhandenen Referenz-Absorptionsbande, die elektronischen Übergänge des oxidierten Cytochrom-c bei 540nm darstellt, wobei bei fortgeschrittener Oxidation der elektronische Übergang deutlich schwächer ausgeprägt ist, stattfindet und ein Vergleich der in beiden Extinktions-Wellenlängen-Kurven E(λ) (1, 2; 1, 5) vorhandenen ersten charakteristischen Absorptionsbande bei ca. 525 nm und der zweiten charakteristischen Absorptionsbande bei ca. 550 nm durchgeführt wird, die beim Verlauf des durch das reduzierte Cytochrom-c veränderten Spektrums (2, 5) verstärkt registrierbar sind.

6. Vorrichtung (20) zur Bestimmung des aktuellen Zustandes (36, 37, 39, 38) von Zellen (11, 111, 112, 114, 113) in Zellbereichen (12), die ungeschädigte intakte Zellen (111), teilgeschädigte Zellen (112, 114) und/oder total geschädigte Zellen (113) aufweisen können, wobei der aktuelle Zustand einer Zelle (112, 114) durch eine Kombination aus Einzelzuständen morphologischer Struktur und aus biochemischem Zustand der Zelle zum gleichen Zeitpunkt definiert ist und den Zustand der Zelle (112, 114) mit einer Zustandsposition (36) in einer Existenzzustandsskala (40), die von einer Zelle (111) mit einer ungeschädigten Intakt-Position (37) aus bis hin zu einer Zelle (113) mit einer totalen Schädigungs-Position (38) als Extremzustands-Zellen reicht, darstellt, unter Einsatz des Verfahrens nach den Ansprüchen 1 bis 5, **dadurch gekennzeichnet,**
**dass** die Vorrichtung (2) zumindest enthält
- eine Kamera (22) in Form einer Pixel-Spektralkamera, die die Intensität des von den Zellen (11, 111, 112, 114, 113) des Zellbereiches (12) reflektierten Lichts (33) registriert und die mit einem Mikroskop (21) in Verbindung steht,
- eine der Pixel-Spektralkamera (22) nachgeschaltete Computer- und programmtechnisch gestützte Auswerteeinheit (23) zumindest für eine Bildaufbereitung, wobei der Auswerteeinheit (23) zumindest eine Speichereinheit (29) zur Speicherung von Datensätzen (32) aus den vielen aufgenommenen Bildern des Zellbereiches (12) zugeordnet ist,
- eine der Auswerteeinheit (23) nachgeordnete Anzeigeeinheit (30), wobei die Anzeigeeinheit (30) den Zustand der Zellen (111, 112, 114, 113) in ihrem Zellaufbau und in ihrer Zellform und spektroskopisch lokalisierte Areale des Zellbereiches (12) mit veränderten Oxidationszuständen des Cytochrom-c ausgibt, aus denen aktuelle Zustände (37, 36, 39, 38) der Zellen (111, 112, 114, 113) ableitbar sind, wobei daraus Veränderungen der Zellen (111, 112, 114, 113) zwischen verschiedenen Zuständen (36, 37, 39, 38) beim Übergang vom intakten Zustand (37) in den totalgeschädigten Zustand (38) indizierbar sind.

7. Vorrichtung nach Anspruch 6,
**dadurch gekennzeichnet,**
**dass** das Mikroskop (21) mit einer Verschiebeeinrichtung (31) versehen ist.

8. Vorrichtung nach Anspruch 7,
**dadurch gekennzeichnet,**
**dass** die computer- und programmtechnisch gestützte Auswerteeinheit (23) zumindest folgende Funktionseinheiten enthält:
- eine erste Funktionseinheit (24) zum Verarbeiten des erfassten Lichts (33) der Zellen (11, 111, 112, 114, 113) in Datensätzen (32) der Speichereinheit (29),
- eine zweite Funktionseinheit (25) zur Bestimmung des Zustandes der Zellformen und des Zellaufbaus der Zellen (11, 111, 112, 114, 113) aus den Datensätzen (32) als definierbare den Zellzuständen zugeordnete morphologische Struktur-Informationen,
- eine dritte Funktionseinheit (261) zur Ermittlung einer Referenz-Absorptionsbande (13) in einem Wellenlängenbereich, in dem zumindest die Extinktion E(A) von Cytochrom-c für intakte Zellen (111) des Zellbereiches (12) vorhanden ist, aus den Datensätzen (32),
- eine vierte Funktionseinheit (262) zur Ermittlung von charakteristischen Absorptionsbanden (14, 15) in einem Wellenlängenbereich, in dem zumindest die Extinktion E(A) von Cytochrom-c für zumindest teilgeschädigte Zellen (112, 114, 113) des Zellbereiches (12) vorhanden ist, aus den Datensätzen (32) und
- eine Vergleichseinheit (27) zur Ermittlung der Veränderung von Intensität und Wellenlänge der charakteristischen Absorptionsbanden (14, 15) der Zellen (112, 114, 113) gegenüber der Referenz-Absorptionsbande (13) der intakten Zellen (111) durch das erfasste Cytochrom-c als definierbare dem Zellzustand zugeordnete biochemische Absorptions-Daten aus der dritten Funktionseinheit (261) und aus der vierten Funktionseinheit (262),
wobei die Ergebnisse der zweiten Funktionseinheit (25) und der Vergleichseinheit (27) in einer Korrelationseinheit (28) zusammengeführt sind, in der eine Kombination aus den morphologischen Struktur-Informationen und aus den biochemischen Absorptions-Daten stattfindet, wobei die Korrelationseinheit (28) über die mit ihr verbundene Anzeigeeinheit (30) einen umfassenden aktuellen Zustand (36, 37, 39, 38) der Zellen (11, 111, 112, 114, 113) des Zellbereiches (12) zur Anzeige bringt.

9. Vorrichtung nach den Ansprüchen 6 bis 8,
**dadurch gekennzeichnet,**
**dass** sie eine als Mikroskop (21) einschließlich der Verschiebeeinrichtung (31) ausgebildete Standard-Spaltlampe aufweist, die vor einem Auge (10) positioniert ist, wobei zur mikroskopischen Spaltlampe (21) ein dispersives Mittel (34) gehört, an das eine Pixel-Spektral kamera (22) angeschlossen ist, die mit einer in einem Personal-Computer (35) enthaltenen Auswerteeinheit (23) in Verbindung steht, wobei sich die vier in der Auswerteeinheit (23) befindlichen Funktionseinheiten (24, 25, 261, 262), die Vergleichseinheit (27) und die Korrelationseinheit (28) in der Auswerteeinheit (23) des Personalcomputers (35) befinden und die dem Personal-Computer (35) zugeordnete Anzeigeeinheit (30) den Bildschirm des Personal-Computers (35) darstellt.

10. Verwendung der Vorrichtung (20) und des Verfahrens zur Bestimmung des aktuellen Zustandes von Zellen (11, 111, 112, 114, 113) in Zellbereichen (12) nach den vorhergehenden Ansprüchen 1 bis 9 im Augenhintergrund (12) zur spektroskopischen Bildgebung der Makula in der Netzhautregion von Augen (10), wobei aus dem Vergleich der Spektren (1, 2, 5) zumindest Veränderungen von Oxidationszuständen des Cytochrom-c und die Konzentration des Cytochrom-c als ein Marker für den aktuellen Zustand (36, 37, 39, 38) der Zelle (11, 111, 112, 114, 113) ablesbar sind.

11. Verwendung der Vorrichtung (20) und des Verfahrens zur Bestimmung des aktuellen Zustandes (36, 37, 39, 38) von Zellen (11, 111, 112, 114, 113) in Zellbereichen (12) nach den vorhergehenden Ansprüchen 1 bis 9 in Zellbereichen (12) der Haut.

12. Verwendung der Vorrichtung (20) und des Verfahrens zur Bestimmung des aktuellen Zustandes (36, 37, 39, 38) von Zellen (11, 111, 112, 114, 113) nach den vorhergehenden Ansprüchen 1 bis 9 in Zellbereichen (12) der Schleimhaut.

## Claims

1. Method for determining the current state of cells (11, 111, 112, 114, 113) in cell regions (12), which may comprise undamaged intact cells (111), partly damaged cells (112, 114) and/or totally damaged cells (113), wherein the current state of a cell (112, 114) is defined by a combination of individual states of morphological structure and the biochemical state of the cell at the same time and represents the state of the cell (112, 114) with a state position (36, 39) in an existence state scale (40), which reaches from a cell (111) with an undamaged intact position (37) to a cell (113) with a total damage position (38) as extreme state cells, **characterized by** the following steps:
- scanning and/or recording (41) a spectroscopic image of the cell region (12) using a pixel spectral camera (22), at least by way of a microscope (21),
- converting (42) the images from the pixel spectral camera (22) into digitized data records (32),
- storing (43) the digitized data records (32) in a memory unit (29) disposed downstream of the pixel spectral camera (22),
- processing and evaluating (44) the data records (32) transferred from the memory unit (29) in an evaluation unit (23),
- displaying (45) the evaluated cell region (12) on a display unit (30) linked to the evaluation unit (23),
wherein the following steps are carried out in the evaluation unit (23):
- determining (46) the state of the cell forms and of the cellular structure of the cells (11, 111, 112, 114, 113) from the data records (32) as definable morphological structure information assigned to the cell states,
- ascertaining (47) absorption bands (13, 14, 15) in a wavelength range in which, at least, an absorbance E(λ) of cytochrome c is present, from the data records (32),
- ascertaining (48) the form and the change in intensity and wavelength of characteristic absorption bands (14, 15) of cells (112, 114, 113) with a modified state in relation to the reference absorption band (13) of the intact cells (111) by way of the detected cytochrome c as definable biochemical absorption data assigned to the cell state,
- forming a combination (49) of the morphological structure information and the biochemical absorption data in a correlation unit (28) for representing the current state (37, 36, 39, 38) of the cells (11, 111, 112, 114, 113) and
- transmitting (50) the current state (37, 36, 39, 38) of the cells (11, 111, 112, 114, 113) into the display unit (30),
wherein the state (37, 36, 39, 38) of the cells (111, 112, 113, 114) in terms of the cellular structure thereof and in terms of the cell form thereof and spectroscopically localized areas of the cell region (12) with the molecularly modified oxidation states of the cytochrome c are output from the evaluation unit (23) into the display unit (39), wherein at least changes in the oxidation states of the cytochrome c are read from the comparison of the characteristic absorption band (14, 15) and the reference absorption band (13), from which changes in the oxidation states of the cytochrome c the current state (37, 36, 39, 38) of a cell (111, 112, 113, 114) may be derived.

2. Method according to Claim 1,
**characterized**
**in that** the stored spectral data records (32) are subjected to a pretreatment in an image preparation/processing device (44), in which interference is eliminated, this being followed by a principal component analysis, in which there is a subdivision into the components determining the current state, wherein the components represent the morphological structure information, the biochemical absorption data and other signal information, wherein at least the morphological structure information and the biochemical absorption data are fed to a linear discriminant analysis, in which a comparison with spectra stored in advance from a training set embodied as a database is carried out for an assignment/classification such that, in the evaluation device (44), a combination of morphological structure information and biochemical absorption data is obtained as a result for the purposes of determining the current state (37, 36, 39, 38) of the cells (11, 111, 112, 114, 113).

3. Method according to Claims 1 and 2,
**characterized**
**in that** the following detailed steps are carried out:
- recording a spectroscopic image by recording several thousand complete absorption spectra (13, 14, 15) of cells (11, 111, 112, 114, 113) or cell regions (12),
- detecting the distribution E(λ) of cytochrome c,
- assigning the distribution E(λ) to predetermined cell areas,
- localizing the cell areas with modified oxidation states of the cytochrome c,
- identifying cells (11, 111, 112, 114, 113) in the current state (37, 36, 39, 38) thereof and determining the cells (112, 114, 113) which deviate from the intact state (37) of the cells (111),
- forming a combination of biochemical data and morphological information for identifying cellular changes in the cells (112, 114, 113).

4. Method according to Claims 1 to 3,
**characterized**
**in that** an absorbance-wavelength curve E(λ) is recorded as a first spectrum (1) of intact cells (111) of cell regions (12) present in the non-damaged state and an absorbance-wavelength curve E(λ) is recorded as another spectrum (2, 5) of at least partly damaged cells (112, 114, 113) in the current state (37, 36, 39, 38) and said absorbance-wavelength curves are compared to one another.

5. Method according to Claim 4,
**characterized**
**in that** the comparison of the reference absorption band present in both absorbance-wavelength curves E(λ) (1, 2; 1, 5) takes place, said reference absorption band representing the electronic transitions of the oxidized cytochrome c at 540 nm, with the electronic transition being pronounced significantly less strongly in the case of advanced oxidation, and a comparison of the first characteristic absorption band at approximately 525 nm and the second characteristic absorption band at approximately 550 nm, present in the two absorbance-wavelength curves E(λ) (1, 2; 1, 5), is carried out, said characteristic absorption bands being registrable more strongly in the curve of the spectrum (2, 5) modified by the reduced cytochrome c.

6. Apparatus (20) for determining the current state (36, 37, 39, 38) of cells (11, 111, 112, 114, 113) in cell regions (12), which may comprise undamaged intact cells (111), partly damaged cells (112, 114) and/or totally damaged cells (113), wherein the current state of a cell (112, 114) is defined by a combination of individual states of morphological structure and of the biochemical state of the cell at the same time and represents the state of the cell (112, 114) with a state position (36) in an existence state scale (40), which reaches from a cell (111) with an undamaged intact position (37) to a cell (113) with a total damage position (38) as extreme state cells, using the method according to Claims 1 to 5, **characterized**
**in that** the apparatus (2) contains at least:
- a camera (22) in the form of a pixel spectral camera, which registers the intensity of the light (33) reflected by the cells (11, 111, 112, 114, 113) in the cell region (12) and which is linked to a microscope (21),
- a computer- and program-assisted evaluation unit (23) disposed downstream of the pixel spectral camera (22), at least for image preparation, wherein at least a memory unit (29) for storing data records (32) from the many recorded images of the cell region (12) is assigned to the evaluation unit (23),
- a display unit (30) disposed downstream of the evaluation unit (23), wherein the display unit (30) outputs the state of the cells (111, 112, 114, 113) in terms of the cellular structure thereof and in terms of the cell form thereof and spectroscopically localized areas of the cell region (12) with changed oxidation states of cytochrome c, from which current states (37, 36, 39, 38) of the cells (111, 112, 114, 113) are derivable, wherein changes in the cells (111, 112, 114, 113) between various states (36, 37, 39, 38) during the transition from the intact state (37) to the totally damaged state (38) are indexable therefrom.

7. Apparatus according to Claim 6,
**characterized**
**in that** the microscope (21) is provided with a displacement device (31).

8. Apparatus according to Claim 7,
**characterized**
**in that** the computer- and program-assisted evaluation unit (23) contains at least the following functional units:
- a first functional unit (24) for processing the detected light (33) of the cells (11, 111, 112, 114, 113) in data records (32) of the memory unit (29),
- a second functional unit (25) for determining the state of the cell forms and the cellular structure of the cells (11, 111, 112, 114, 113) from the data records (32) as definable morphological structure information assigned to the cell states,
- a third functional unit (261) for ascertaining a reference absorption band (13) in a wavelength range, in which at least the absorbance E(λ) of cytochrome c is present for intact cells (111) of the cell region (12), from the data records (32),
- a fourth functional unit (262) for ascertaining characteristic absorption bands (14, 15) in a wavelength range, in which at least the absorbance E(λ) of cytochrome c is present for at least partly damaged cells (112, 114, 113) of the cell region (12), from the data records (32), and
- a comparison unit (27) for ascertaining the change in intensity and wavelength of the characteristic absorption bands (14, 15) of the cells (112, 114, 113) in relation to the reference absorption band (13) of the intact cells (111) by the detected cytochrome c as definable biochemical absorption data assigned to the cell state from the third functional unit (261) and from the fourth functional unit (262),
wherein the results of the second functional unit (25) and the comparison unit (27) are combined in a correlation unit (28), in which a combination of the morphological structure information and the biochemical absorption data takes place, wherein the correlation unit (28) displays a comprehensive current state (36, 37, 39, 38) of the cells (11, 111, 112, 114, 113) of the cell region (12) by way of the display unit (30) connected therewith.

9. Apparatus according to Claims 6 to 8,
**characterized**
**in that** it comprises a standard slit lamp embodied as a microscope (21) including the displacement device (31), said standard slit lamp being positioned in front of an eye (10), wherein the microscopic slit lamp (21) includes a dispersive means (34), to which a pixel spectral camera (22) is connected, the latter being linked to an evaluation unit (23) contained in a personal computer (35), wherein the four functional units (24, 25, 261, 262) situated in the evaluation unit (23), the comparison unit (27) and the correlation unit (28) are situated in the evaluation unit (23) of the personal computer (35) and the display unit (30) assigned to the personal computer (35) represents the screen of the personal computer (35).

10. Use of the apparatus (20) and of the method for determining the current state of cells (11, 111, 112, 114, 113) in cell regions (12) according to the preceding Claims 1 to 9, in the fundus of the eye (12) for spectroscopic imaging of the macula in the retinal region of eyes (10), wherein at least changes in oxidation states of the cytochrome c and the concentration of the cytochrome c may be read from the comparison of the spectra (1, 2, 5) as a marker for the current state (36, 37, 39, 38) of the cell (11, 111, 112, 114, 113).

11. Use of the apparatus (20) and of the method for determining the current state (36, 37, 39, 38) of cells (11, 111, 112, 114, 113) in cell regions (12) according to the preceding Claims 1 to 9, in cell regions (12) of the skin.

12. Use of the apparatus (20) and of the method for determining the current state (36, 37, 39, 38) of cells (11, 111, 112, 114, 113) according to the preceding Claims 1 to 9, in cell regions (12) of the mucous membrane.

## Revendications

1. Procédé pour la détermination de l'état actuel de cellules (11, 111, 112, 114, 113) dans des zones de cellules (12) qui peuvent comporter des cellules intactes inaltérées (111), des cellules partiellement altérées (112, 114) et/ou des cellules totalement altérées (113), dans lequel l'état actuel d'une cellule (112, 114) est défini par une combinaison d'états individuels d'une structure morphologique et d'un état biochimique de la cellule à un même instant et représente l'état de la cellule (112, 114) ayant une position d'état (36, 39) sur une échelle d'états d'existence (40) qui va d'une cellule (111) ayant une position intacte inaltérée (37) jusqu'à une cellule (113) ayant une position d'altération totale (38) en tant que cellules à états extrêmes,
**caractérisé par** les étapes consistant à :
- échantillonner et/ou acquérir (41) par l'intermédiaire d'un microscope (21) une image spectroscopique de la zone de cellules (12) au moyen d'une caméra spectrale à pixels (22) au moins,
- convertir (42) les images de la caméra spectrale à pixels (22) en des jeux de données numérisés (32),
- stocker (43) les jeux de données numérisés (32) dans une unité de stockage (29) connectée en aval de la caméra spectrale à pixels (22),
- traiter et analyser (44) les jeux de données (32) reçus en provenance de l'unité de stockage (29) dans une unité d'analyse (23),
- afficher (45) la zone de cellules (12) analysée sur une unité d'affichage (30) reliée à l'unité d'analyse (23),
dans lequel les étapes suivantes sont effectuées dans l'unité d'analyse (23) :
- déterminer (46) l'état des formes de cellules et de la structure de cellule des cellules (11, 111, 112, 114, 113) à partir des jeux de données (32) en tant qu'informations morphologiques définissables associées aux états des cellules,
- déterminer (47), à partir des jeux de données (32), des bandes d'absorption (13, 14, 15) dans une plage de longueurs d'onde dans laquelle est présente au moins une extinction E(λ) du cytochrome c,
- déterminer (48) l'établissement et la variation de l'intensité et de la longueur d'onde de bandes d'absorption caractéristiques (14, 15) de cellules (112, 114, 113) dont l'état est modifié par rapport aux bandes d'absorption de référence (13) des cellules intactes (112) par l'intermédiaire du cytochrome c détecté en tant que données d'absorption biochimiques définissables associées à l'état de cellule,
- combiner (49) les informations de structures morphologiques et les données d'absorption biochimiques dans une unité de corrélation (28) pour représenter l'état actuel (37, 36, 39, 38) des cellules (11, 111, 112, 114, 113), et
- transmettre (50) l'état actuel (37, 36, 39, 38) des cellules (11, 111, 112, 114, 113) à l'unité d'affichage (30),
dans lequel l'état (37, 36, 39, 38) des cellules (111, 112, 114, 113) en ce qui concerne leur structure de cellule et leur forme de cellule et les aires localisées spectroscopiquement de la zone de cellules (12) présentant les états d'oxydation moléculaire modifiés du cytochrome c est fourni en sortie par l'unité d'analyse (23) sur l'unité d'affichage (39), dans lequel au moins les modifications des états d'oxydation du cytochrome c sont lues à partir de la comparaison des bandes d'absorption caractéristiques (14, 15) et des bandes d'absorption de référence (13), à partir desquelles l'état actuel (37, 36, 39, 38) d'une cellule (111, 112, 114, 113) peut être déduit.

2. Procédé selon la revendication 1,
**caractérisé en ce que** les jeux de données spectrales stockés (32) sont soumis à un prétraitement dans un système de traitement d'image/traitement (44) lors duquel une élimination des perturbations est effectuée, suivi d'une analyse en composantes principales lors de laquelle une subdivision en les composantes déterminant l'état actuel est effectuée, dans lequel les composantes représentent les informations de structures morphologiques, les données d'absorption biochimiques, et d'autres informations de signaux, dans lequel les informations de structures morphologiques et les données d'absorption biochimiques sont au moins soumises à une analyse de discrimination linéaire lors de laquelle une comparaison à des spectres préalablement stockés provenant d'un ensemble d'apprentissage réalisé sous la forme d'une base de données est effectuée pour une association/classification de manière à ce qu'une combinaison d'informations de structures morphologiques et de données d'absorption biochimiques soit obtenue lors de l'analyse (24) en tant que résultat permettant de déterminer l'état actuel (37, 36, 39, 38) des cellules (11, 111, 112, 114, 113).

3. Procédé selon les revendications 1 et 2,
**caractérisé en ce que** les étapes détaillées suivantes sont effectuées :
- acquérir une image spectroscopique par acquisition de plusieurs milliers de spectres d'absorption complets (13, 14, 15) de cellules (11, 111, 112, 114, 113) ou de zones de cellules (12),
- détecter la distribution E(λ) du cytochrome c,
- associer la distribution E(λ) d'aires de cellules prédéterminées,
- localiser les aires de cellules ayant des états d'oxydation modifiés du cytochrome c,
- identifier des cellules (11, 111, 112, 114, 113) en ce qui concerne leur état actuel (37, 36, 39, 38) et déterminer les cellules (112, 114, 113) qui s'écartent de l'état intact (37) des cellules (111),
- combiner les données biochimiques et les informations morphologiques pour identifier les modifications cellulaires à apparaissant dans les cellules (112, 114, 113).

4. Procédé selon l'une quelconque des revendications 1 à 3,
**caractérisé en ce qu'**une courbe d'extinction en fonction de la longueur d'onde E(λ) est acquise en tant que premier spectre (1) de cellules intactes (111) de zones de cellules (12) se trouvant dans un état non altéré et acquérir une courbe d'extinction en fonction de la longueur d'onde E(λ) en tant qu'autre spectre (2, 5) de cellules au moins partiellement altérées (112, 114, 113) dans l'état actuel (37, 36, 39, 38) et les comparer l'une à l'autre.

5. Procédé selon la revendication 4,
**caractérisé en ce que** la comparaison des bandes d'absorption de référence présentes dans les deux courbes d'extinction en fonction de la longueur d'onde E(λ) (1, 2 ; 1, 5) représente les transitions électroniques du cytochrome c oxydé à 540 nm, dans lequel, dans un état d'oxydation avancé, la transition électronique est sensiblement moins prononcée et se produit, et une comparaison des premières bandes d'absorption caractéristiques présentes dans les deux courbes d'extinction en fonction de la longueur d'onde E (λ) (1, 2 ; 1, 5) à environ 525 nm et des deuxièmes bandes d'absorption caractéristiques à environ 550 nm est effectuée, lesquelles courbes peuvent être enregistrées de manière amplifiée lors de l'évolution du spectre (2, 5) modifié par le cytochrome c réduit.

6. Dispositif (20) pour la détermination de l'état actuel (36, 37, 39, 38) de cellules (11, 111, 112, 114, 113) dans des zones de cellules (12) qui peuvent comporter des cellules intactes inaltérées (111), des cellules partiellement altérées (112, 114) et/ou des cellules totalement altérées (113), dans lequel l'état actuel d'une cellule (112, 114) est défini par une combinaison d'états individuels d'une structure morphologique et d'un état biochimique de la cellule à un même instant et représente l'état de la cellule (112, 114) ayant une position d'état (36) sur une échelle d'état d'existence (40) qui va d'une cellule (111) ayant une position intacte inaltérée (37) jusqu'à une cellule (113) ayant une position d'altération totale (38) en tant que cellules à états extrêmes, par mise en oeuvre du procédé selon les revendications 1 à 5,
**caractérisé en ce que** le dispositif (2) comporte au moins :
- une caméra (22) sous la forme d'une caméra spectrale à pixels qui enregistre l'intensité de la lumière (33) réfléchie par les cellules (11, 111, 112, 114, 113) de la zone de cellules (12) et est reliée à un microscope (21),
- une unité d'analyse (23) informatisée et programmable connectée en aval de la caméra spectrale à pixels (22) au moins destinée à un traitement d'image, dans lequel au moins une unité de stockage (29) destinée à stocker des jeux de données (32) provenant des multiples images acquises de la zone de cellules (12) est associée à l'unité d'analyse (23),
- une unité d'affichage (30) connectée en aval de l'unité d'analyse (23), dans lequel l'unité d'affichage (30) délivre l'état des cellules (111, 112, 114, 113) en ce qui concerne leur structure de cellule et leur forme de cellule et des aires localisées spectroscopiquement de la zone de cellules (12) ayant des états d'oxydation modifiés du cytochrome c, à partir desquels il est possible de déduire des états actuels (37, 36, 39, 38) des cellules (111, 112, 114, 113), dans lequel il est possible d'indiquer à partir de ceux-ci des modifications des cellules (111, 112, 114, 113) entre différents états (36, 37, 39, 38) lors de la transition d'un état intact (37) à l'état totalement altéré (38).

7. Dispositif selon la revendication 6,
**caractérisé en ce que** le microscope (21) est pourvu d'un dispositif de déplacement (31).

8. Dispositif selon la revendication 7,
**caractérisé en ce que** l'unité d'analyse (23) informatisée et programmable comporte au moins les unités fonctionnelles suivantes :
- une première unité fonctionnelle (24) destinée à traiter la lumière détectée (33) des cellules (111, 112, 114, 113) dans des jeux de données (32) de l'unité de stockage (29),
- une deuxième unité fonctionnelle (25) destinée à déterminer l'état des formes de cellules et de la structure de cellule des cellules (111, 112, 114, 113) à partir des jeux de données (32) en tant qu'informations de structure définissables associées aux &états des cellules,
- une troisième unité fonctionnelle (261) destinée à déterminer, à partir des jeux de données (32), une bande d'absorption de référence (13) dans une zone de longueur d'onde dans laquelle au moins l'extinction E(λ) du cytochrome c est présente pour des cellules intactes (111) de la zone de cellules (12),
- une quatrième unité fonctionnelle (262) destinée à déterminer, à partir des jeux de données (32), des bandes d'absorption caractéristiques (14, 15) dans une plage de longueurs d'onde dans laquelle apparaît au moins l'extinction E(λ) du cytochrome c pour des cellules au moins partiellement altérées (112, 114, 113) de la zone de cellules (12), et
- une unité de comparaison (27) destinée à déterminer la variation de l'intensité et de la longueur d'onde des bandes d'absorption caractéristiques (14, 15) des cellules (112, 114) par rapport à la bande d'absorption de référence (13) des cellules intactes (111) par l'intermédiaire du cytochrome c détecté en tant que données d'absorption biochimiques définissables associées à l'état de cellule provenant de la troisième unité fonctionnelle (261) et de la quatrième unité fonctionnelle (262),
dans lequel les résultats de la deuxième unité fonctionnelle (25) et de l'unité de comparaison (27) sont combinés dans une unité de corrélation (28) dans laquelle est effectuée ladite combinaison des informations de structures morphologiques et des données d'absorption biochimiques, dans lequel l'unité de corrélation (28) permet d'afficher, par l'intermédiaire de l'unité d'affichage (13) qui lui est reliée, un état actuel (36, 37, 39, 38) des cellules (11, 111, 112, 114, 113) de la zone de cellules (12).

9. Dispositif selon les revendications 6 à 8, **caractérisé en ce qu'**il comporte une lampe à fente standard réalisée en tant que microscope (21) incluant le dispositif de déplacement (31), laquelle lampe à fente est positionnée devant un oeil (10), dans lequel la lampe à fente microscopique (21) comprend un moyen dispersif (34) auquel est raccordée une caméra spectrale à pixels (22) qui est reliée à une unité d'analyse (23) contenue dans un ordinateur personnel (35), dans lequel les quatre unités fonctionnelles (24, 25, 261, 262) se trouvant dans l'unité d'analyse (23), l'unité de comparaison (27) et l'unité de corrélation (28) sont logées dans l'unité d'analyse (23) de l'ordinateur personnel (37) et l'unité d'affichage (30) associée à l'ordinateur personnel (35) constitue l'écran de l'ordinateur personnel (35).

10. Utilisation du dispositif (20) et du procédé pour la détermination de l'état actuel de cellules (11, 111, 112, 114, 113) dans des zones de cellules (12) selon les revendications 1 à 9 précédentes dans le fond de l'oeil (12) pour générer des images spectroscopiques de la macula dans la région de la rétine de l'oeil (10), dans lequel les variations des états d'oxydation du cytochrome c et la concentration du cytochrome c peuvent être au moins lues à partir de la comparaison des spectres (1, 2, 5) en tant que marqueurs de l'état actuel (36, 37, 39, 38) de la cellule (11, 111, 112, 114, 113).

11. Utilisation du dispositif (20) et du procédé de détermination de l'état actuel (36, 37, 39, 38) de cellules (11, 111, 112, 114, 113) dans des zones de cellules (12) selon les revendications 1 à 9 précédentes dans les zones de cellules (12) de l'épiderme.

12. Utilisation du dispositif (20) et du procédé de détermination de l'état actuel (36, 37, 39, 38) de cellules (11, 111, 112, 114, 113) selon les revendications 1 à 9 précédentes dans des zones partielles (12) de la muqueuse.
